# EUROPÄISCHE PATENTANMELDUNG

(11) **EP 2 979 596 A1**
(43) Veröffentlichungstag der Anmeldung: **03.02.2016**
(21) Anmeldenummer: 14179526.0
(22) Anmeldetag: 01.08.2014
(51) Int. Cl.: A47J 43/25

(54) **Multifunktionsgerät für Haushaltszwecke**

(71) Anmelder: Lu, Cong Qiang, Taizhou City, Zhejiang (CN)
(72) Erfinder: Lu, Cong Qiang, Taizhou City, Zhejiang (CN)
(74) Vertreter: Schulte & Schulte

(57) **Zusammenfassung**

Ein Multifunktionsgerät für Haushaltszwecke umfasst mehrere Arbeitsplatten 2, 3 zum Schneiden oder Reiben von Gemüse oder Obst. An der Oberseite 4 einer Box 1 sind zwei Arbeitsplatten 2, 3 an ihren Stirnseiten 7, 8 gelenkig miteinander verbunden und in einer ausgeklappten Position zueinander in einem stumpfen Winkel angeordnet. An der Unterseite 5 der Box 1 ist eine Aufnahme 6 für die beiden Arbeitsplatten 2, 3 in einer eingeklappten Position vorgesehen.

## Beschreibung

Die Erfindung betrifft ein Multifunktionsgerät für Haushaltszwecke, mit mehreren Arbeitsplatten zum Zerkleinern von Gemüse oder Obst.

Multifunktionsgeräte für Haushaltszwecke sind u. a. aus der CN 202960328 U oder der CN 202960239 bekannt. Letztere etwa umfasst eine Art Gehäuse und eine Schublade, in der das Schneidgut fällt, nachdem das Obst oder Gemüse auf einer Arbeitsplatte entsprechend zerkleinert, d. h. geschnitten, gerieben oder gehobelt wurde. Es gibt außerdem Multifunktionsgeräte mit mehreren Arbeitsplatten, die jedoch separate ausgebildet sind und völlig unabhängig voneinander funktionieren und sich nicht ergänzen. Nach separatem Gebrauch werden diese Geräte uach wieder für sich verstaut. Konsequenz daraus ist u. a., dass diese bekannten Multifunktionsgeräte aus zu vielen Komponenten bestehen und dabei zu groß bauen und sich insofern als unpraktisch erweisen.

Damit stellt sich der vorliegenden Erfindung die Aufgabe, ein Multifunktionsgerät für Haushaltszwecke mit mehreren Arbeitsplatten zu schaffen, das sich durch besondere Kompaktheit, einfache Handhabung sowie dadurch auszeichnet, dass es mit sämtlichen Komponenten nach dem Gebrauch gut wieder verstaut werden kann.

Diese Aufgabe wird gelöst durch eine Box, an deren Oberseite zwei an ihren Stirnseiten gelenkig miteinander verbundene Arbeitsplatten in einer ausgeklappten Position zueinander in einem spitzen Winkel angeordnet sind und an deren Unterseite eine Aufnahme für die beiden Arbeitsplatten in einer eingeklappten Position vorgesehen ist, in welcher diese hintereinander angeordnet sind.

Das erfindungsgemäße Multifunktionsgerät umfasst eine Box, die an ihrer Oberseite das Aufstellen zweier Arbeitsplatten in einem spitzen Winkel, d. h. in einem Winkel von weniger als 90° zueinander möglich macht, sodass in diesem ausgeklappten Zustand für den Nutzer ungehinderter Zugriff auf beide Arbeitsplatten besteht. In einer eingeklappten Position hingegen befinden sich die beiden Arbeitsplatten hintereinander angeordnet in einer Aufnahme an der Unterseite der Box, sodass die Box trotz der Multifunktionalität leicht verstaut werden kann, ohne dabei zu viel Platz einzunehmen. Vorteilhafterweise kann die Box samt komplettem Zubehör verstaut werden, Einzelteile können nicht verloren gehen oder müssen lästig zusammengesucht werden, bevor das Gerät in Benutzung genommen werden kann.

Wie bereits angesprochen, sind die beiden Arbeitsplatten an ihren Stirnseiten gelenkig miteinander verbunden. Ergänzend dazu ist vorgesehen, dass die erste Arbeitsplatte gelenkig mit der Box verbunden ist. Um das Gelenk, das Box und erste Arbeitsplatte miteinander verbindet, können also beide Arbeitsplatten zwischen der Arbeits- und der Ruheposition hin- und hergeschwenkt werden. Von selbst finden die beiden Arbeitsplatten dabei ihre jeweilige Position an der Oberseite der Box im ausgeklappten und an der Unterseite der Box im eingeklappten Zustand.

Das aus beiden Arbeitsplatten bestehende Ensemble kann auch von der Box demontiert werden, etwa zu Reinigungszwecken, indem die erste Arbeitsplatte lösbar mit der Box verbunden ist.

Um dieser Anforderung zu entsprechen, das Schwenken um das Gelenk wie die Demontage zu ermöglichen, ist vorgesehen, dass zwischen der Box und der ersten Arbeitsplatte ein Verbindungsglied positioniert ist, das mit der Box lösbar und mit der ersten Arbeitsplatte über ein Gelenk verbunden ist. Das Verbindungsglied umfasst dabei einerseits das Gelenk, kann aber im Bedarfsfall andererseits eben auch demontiert werden, so dass beide Arbeitsplatten von der Box gelöst werden können.

Es gilt natürlich, die beiden Arbeitsplatten in der ausgeklappten Arbeitsposition so zu stabilisieren, dass eine uneingeschränkte Benutzung beider Arbeitsplatten stattfinden kann. Es empfiehlt sich daher, wenn die zweite Arbeitsplatte an der Oberseite der Box lösbar mit dieser verbindbar ist.

Dies geschieht am zweckmäßigsten, wenn zur lösbaren Verbindung ein Schlitz an der Oberseite der Box und eine am vorderen Ende der zweiten Arbeitsplatte angeordnete Klemmplatte dienen. Dies führt dann vorteilhafterweise dazu, dass die beiden an ihren Stirnseiten gelenkig miteinander verbundenen Arbeitsplatten in der ausgeklappten Arbeitsposition automatisch optimal positioniert sind, wenn die Klemmplatte ihren Sitz in dem quer an der Oberseite der Box positionierten Schlitz eingenommen hat. Das Einsetzen der Klemmplatte in den Schlitz oder einer vergleichbaren Aufnahme an der Oberseite bringt also gleichzeitig die beiden Arbeitsplatten zueinander in Stellung.

Eine besonders gute Handhabung der beiden Arbeitsplatten und ein Einsatz der dort installierten Werkzeuge ist möglich, wenn die beiden Arbeitsplatten in der ausgeklappten Position in einem Winkel von 60° - 90° angeordnet sind. Wie bereits angesprochen, wird dies gewissermaßen automatisch erreicht, wenn die Klemmplatte an dem der ersten Platte abgewandten Ende der zweiten Platte in den Schlitz eingreift.

Die Multifunktionalität kann noch optimiert werden, indem mindestens eine der Arbeitsplatten eine Aufnahme für auswechselbar ausgebildete Schneid- und Reibwerkzeuge aufweist, sodass je nach Belieben Werkzeuge variiert eingesetzt werden können. Die Werkzeuge sind dabei Plattenabschnitten zugeordnet, die in die Aufnahmen in der jeweiligen Arbeitsplatte eingesetzt werden. Die eigentliche Arbeitsplatte bildet dabei gemeinsam mit dem eingesetzten Plattenabschnitt die Anlauf- und Ablaufflächen für das Schneidgut. Die Werkzeuge samt Plattenabschnitt, welche das Schneidgut dabei passiert, können in der erfindungsgemäßen Box in beliebiger Ausgestaltung, Anzahl und Größe vorgehalten werden.

Das Augenmerk gilt ferner der Unterseite der Box, wo die beiden Arbeitsplatten hintereinander und miteinander fluchtend in der eingeklappten Ruheposition untergebracht werden sollen. Dass die Aufnahme an der Unterseite der Box an ihrem dem Gelenk abgewandten Ende einen Anschlag aufweist, begrenzt dabei das Einsetzen der beiden Platten in die Aufnahme und hilft, diese in der Ruheposition zu fixieren.

Ausführlich erörtert wurde ja bereits die vorteilhafte Lösung mit der Klemmplatte, die an der Oberseite in der Box fixiert werden kann. Eine vorteilhafte Doppelfunktion für diese ist verwirklicht, indem die Klemmplatte den formschlüssigen Abschluss der beiden hintereinander angeordneten Arbeitsplatten in der eingeklappten Position gegenüber der Box bildet. In Zusammenspiel mit dem gerade beschriebenen Anschlag an dem dem Gelenk zum Verschwenken der Arbeitsplatten abgewandten Ende der Aufnahme dient die Klemmplatte als Abschluss an dem dem Gelenk zugewandten Ende der Aufnahme in der eingeklappten Ruheposition der beiden Arbeitsplatten. Der Nutzer kann also allein über ein Führen der Klemmplatte die Arbeitsplatten zwischen der ein- und der ausgeklappten Position hin- und herschwenken, die Klemmplatte gibt gewissermaßen beide Positionen in dem Schlitz an der Oberseite bzw. als Anschlag an der Unterseite der Box vor, was die Handhabung natürlich deutlich vereinfacht.

Eine weitere vorteilhafte Ausführungsform der Erfindung sieht vor, dass die Box an ihrer Unterseite mindestens eine Aufnahme für ein Werkzeug aufweist, die zweckmäßigerweise neben der Aufnahme für die beiden hintereinander positionierten Arbeitsplatten vorgesehen ist. Gedacht ist dabei etwa an einen Schieber, mit dem das Schneidgut leicht und vor allen Dingen für den Nutzer ungefährlich über ein Messer oder ein anderes Schneidelement geschoben werden kann.

Dass die Box mit einer korrespondierend zu deren Oberseite ausgebildeten Abdeckplatte ausgerüstet ist, trägt zudem dazu bei, dass eine besonders kompakte Lösung mit einer Box geschaffen ist, an der unterschiedlich bestückte Arbeitsplatten in verschiedenen Positionen eingesetzt und untergebracht werden können.

Die Erfindung zeichnet sich insbesondere dadurch aus, dass ein Multifunktionsgerät für Haushaltszwecke mit mehreren Arbeitsplatten verwirklicht ist, das als eine kompakte und leicht und sicher handhabbare Box ausgebildet ist. Maßgeblich ist dabei eine ausgeklappte Arbeitsposition, in welcher die beiden Arbeitsplatten in einem spitzen Winkel zueinander angeordnet an der Oberseite der Box fixiert sind, während eine eingeklappte Ruheposition vorsieht, dass die beiden gelenkig miteinander verbundenen Arbeitsplatten an der Unterseite hintereinander in einer Flucht in einer dort positionierten Aufnahme gehalten sind. Ein Zusammenspiel von Gelenken und Anschlägen führt dabei zu einer einfachen und sicheren Handhabung. Die multifunktionale Box kann außerdem dank ihrer Kompaktheit und vorteilhaften räumlichen Ausgestaltung zahlreiche Werkzeuge aufnehmen, die beliebig ausgetauscht und eingesetzt werden können. Vorteilhafterweise kann die Box samt komplettem Zubehör verstaut werden, Einzelteile können nicht verloren gehen oder müssen lästig zusammengesucht werden, bevor das Gerät in Benutzung genommen werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Box mit den Arbeitsplatten in ausgeklappter Position in Vorderansicht,
- Figur 2: eine Box mit den Arbeitsplatten in ausgeklappter Position in Rückansicht,
- Figur 3: eine Explosionsdarstellung der maßgeblichen Bauteile,
- Figur 4: ein Detail aus Figur 3 und
- Figur 5: einen Deckel.

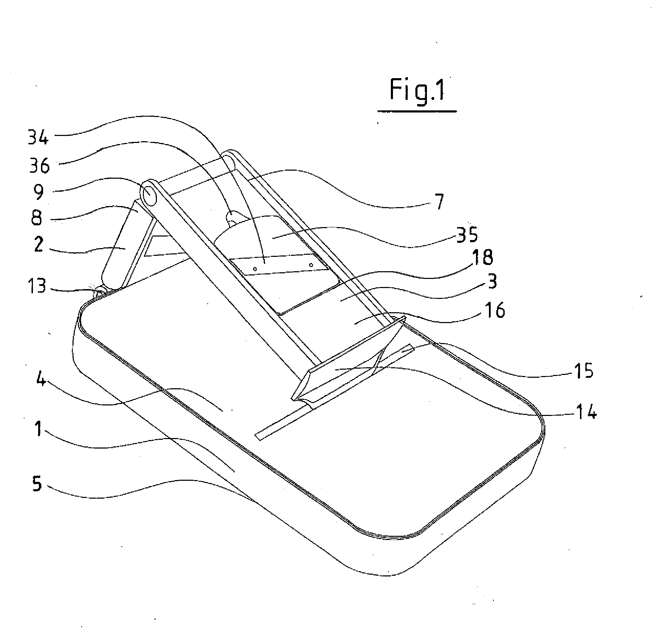

Figur 1 zeigt die Box 1 mit der ersten Arbeitsplatte 2 und der zweiten Arbeitsplatte 3, die in einem spitzen Winkel an der Oberseite 4 dieser Box 1 positioniert sind. Beide Arbeitsplatten 2, 3 können in dieser ausgeklappten Position leicht und sicher bedient werden. Während das Werkzeug der ersten, kleineren Arbeitsplatte 2 hier verdeckt ist, ist das Werkzeug 19 der zweiten, größeren Arbeitsplatte 3 gut zu erkennen. Es handelt sich dabei um ein Messer 34, das samt einer Teilplatte 35 in einer Aufnahme 18 in der Arbeitsplatte 3 positioniert ist. Eine Ausnehmung 36 in der Arbeitsplatte 3 erleichtert das Herausnehmen der Teilplatte 35. Am unteren Ende 16 der zweiten Arbeitsplatte 3 sind beide Arbeitsplatten 2, 3 über die Klemmplatte 14 in dem an der Oberseite 4 der Box 1 vorgesehenen Schlitz 15 gehalten, sodass eine stabile Positionierung der beiden Arbeitsplatten 2, 3 in dem spitzen Winkel gewährleistet und das Gelenk 9, das die Stirnseiten 7, 8 der beiden Arbeitsplatten 2, 3 miteinander verbindet, in entsprechender Weise blockiert ist. Zum Verschwenken des Ensembles beider Arbeitsplatten 2, 3 dient dann das Gelenk 13, über das die erste Arbeitsplatte 2 und die Box 1 miteinander verbunden sind.

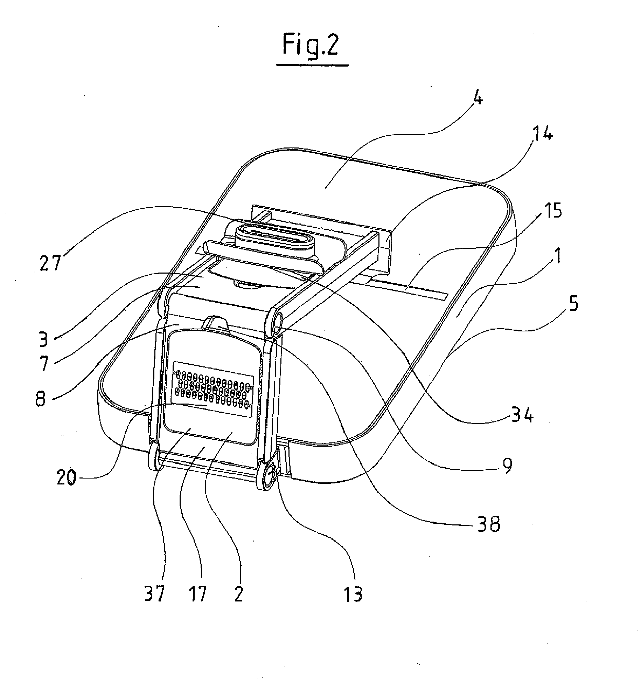

Veranschaulicht ist dieses Zusammenspiel dann nochmals in Figur 2, einer Rückansicht auf Box 1, Arbeitsplatte 2 und Arbeitsplatte 3. Mit 27 ist ein als Schieber ausgebildetes Werkzeug bezeichnet, mit dem Schneidgut durch das in der Arbeitsplatte 3 vorgesehene Messer 34 bzw. an diesem vorbei in Richtung Oberseite 4 der Box befördert werden kann. Dabei bildet die Oberseite 4 der Box 1 gleichzeitig eine Fläche, auf der das Schneidgut in optimaler Weise angesammelt werden kann. Veranschaulicht ist außerdem, dass auch eine Teilplatte 37 der Arbeitsplatte 2 durch Einsetzen eines Fingers in die Ausnehmung 38 und Ziehen an der Teilplatte 37 denkbar einfach aus der Aufnahme 17 demontiert werden kann, sofern das Werkzeug 20 ausgetauscht werden soll.

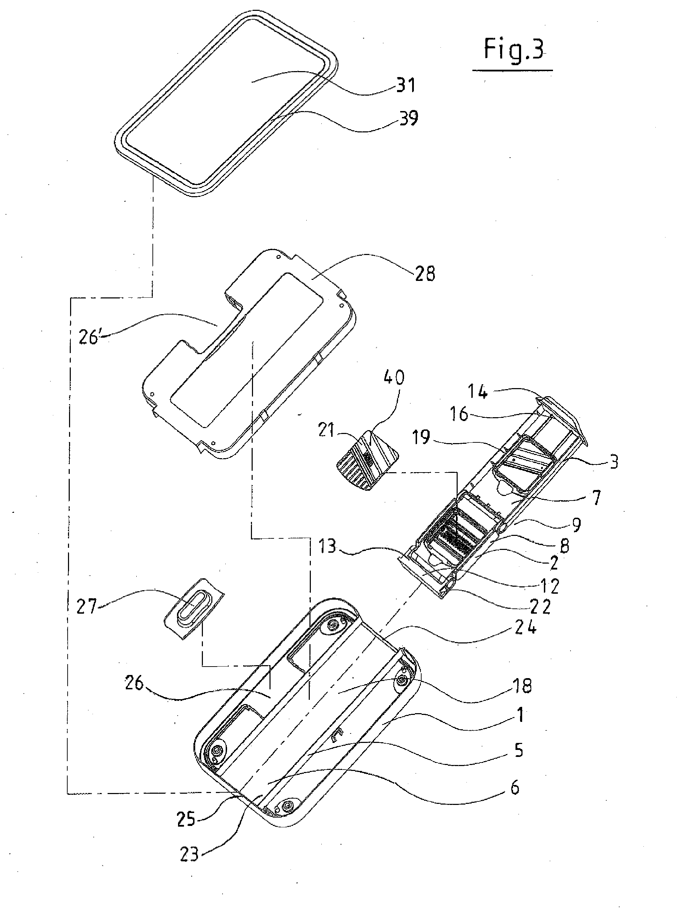

Figur 3 veranschaulicht nun die Ansicht auf die Unterseite 5 der Box 1 mit Blick auf die Aufnahme 6, welche sich über die komplette Länge der Box 1 erstreckt. Dabei korrespondieren in der Ausbildung, was Formgebung, Länge und Breite betrifft, die Aufnahme 6 an der Unterseite 5 der Box 1 und die beiden über das Gelenk 9 an deren Stirnseiten 7 und 8 verbundenen Arbeitsplatten 2 und 3, die hintereinander und fluchtend in der Aufnahme 6 in deren eingeklappter Position angeordnet sind. An dem dem Gelenk 13 abgewandten Ende 23 der Aufnahme 6 befindet sich ein Anschlag 25. Mit dieser Aufnahme 6 korrespondieren die beiden Arbeitsplatten 2 und 3 mit dem Gelenk 13 und dem Anschlag 22 sowie der Klemmplatte 14 am Ende 16 der Arbeitsplatte 3. Mit 21 ist ein weiteres Werkzeug bezeichnet, das samt Teilplatte 40 in die erste Arbeitsplatte 2 einsetzbar ist. Außerdem trägt der Schieber das Bezugszeichen 27, der in die Aufnahme 26 an der Unterseite 5 der Box 1 eingesetzt werden kann. Mit 28 ist eine Abdeckplatte als ergänzender weiterer Bestandteil der Box 1 bezeichnet, die auch eine Ausnehmung 26' für den Schieber 27 aufweist. Die Abdeckplatte 28 kann in der Ruheposition der beiden Arbeitsplatten 2 und 3 auf die Unterseite 4 der Box 1 aufgesetzt werden. Ergänzend dazu ist noch eine Deckelplatte 39 vorgesehen.

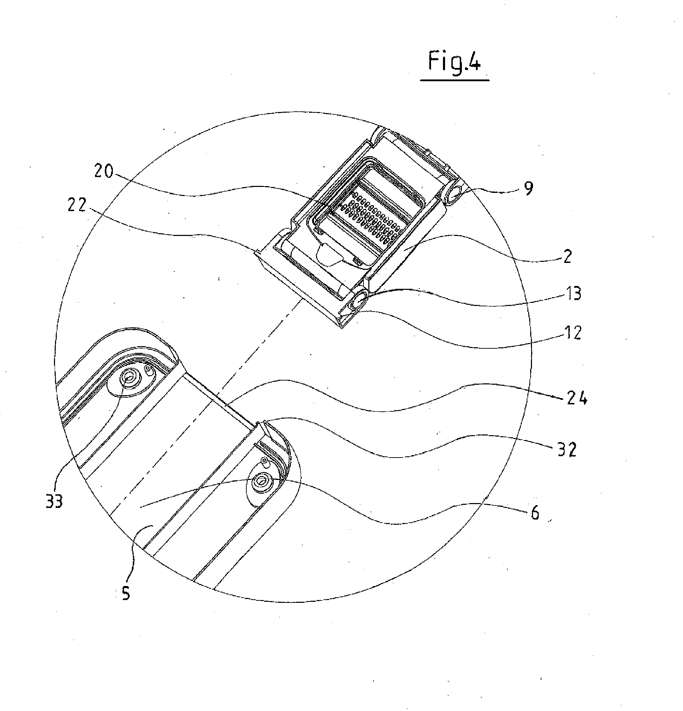

Figur 4 veranschaulicht nochmals die wesentlichen korrespondierenden Bauteile zwischen der ersten Arbeitsplatte 2 und der Box 1. Anschläge 22, 24, 32 sichern die Position zwischen der Aufnahme 6 seitens der Box 1 und dem Verbindungsglied 12 seitens der Arbeitsplatte 2. Dieses Verbindungsglied 12 umfasst einerseits das Gelenk 13 zur Arbeitsplatte 2 und andererseits eben den Anschlag 22, zugleich für eine mögliche Demontage. Erkennbar ist außerdem noch der Anschluss 33 für den hier nicht dargestellten Deckel.

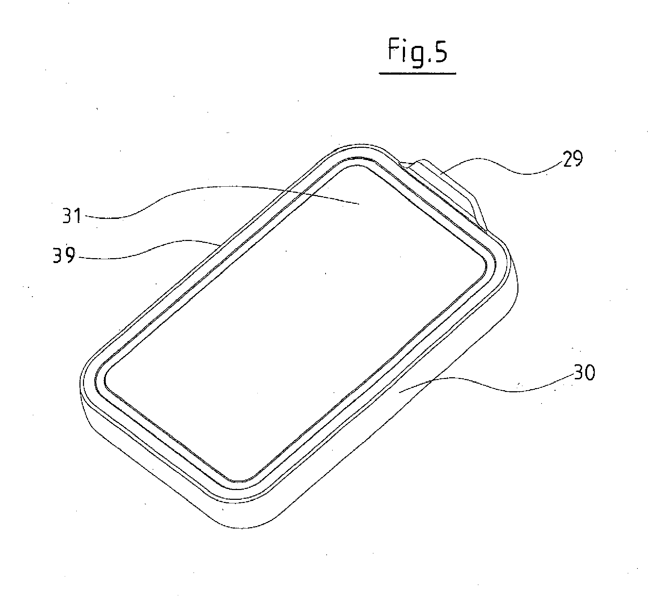

Schließlich zeigt Figur 5 eine Deckelplatte 39 mit der großen Fläche 31, dem Rand 30 und dem Griff 29.

## Patentansprüche

1. Multifunktionsgerät für Haushaltszwecke, mit mehreren Arbeitsplatten zum Zerkleinern von Gemüse oder Obst,
**gekennzeichnet durch**
eine Box (1), an deren Oberseite (4) zwei an ihren Stirnseiten (7, 8) gelenkig miteinander verbundene Arbeitsplatten (2, 3) in einer ausgeklappten Position zueinander in einem spitzen Winkel angeordnet sind und an deren Unterseite (5) eine Aufnahme (6) für die beiden Arbeitsplatten (2, 3) in einer eingeklappten Position vorgesehen ist, in welcher diese hintereinander angeordnet sind.

2. Multifunktionsgerät nach Anspruch 1,
**dadurch gekennzeichnet,**
**dass** die erste Arbeitsplatte (2) gelenkig mit der Box (1) verbunden ist.

3. Multifunktionsgerät nach Anspruch 1,
**dadurch gekennzeichnet,**
**dass** die erste Arbeitsplatte (2) lösbar mit der Box (1) verbunden ist.

4. Multifunktionsgerät nach Anspruch 2 und 3,
**dadurch gekennzeichnet,**
**dass** zwischen der Box (1) und der ersten Arbeitsplatte (2) ein Verbindungsglied (12) positioniert ist, das mit der Box (1) lösbar und mit der ersten Arbeitsplatte (2) über ein Gelenk (13) verbunden ist.

5. Multifunktionsgerät nach Anspruch 1,
**dadurch gekennzeichnet,**
**dass** die zweite Arbeitsplatte (3) an der Oberseite (4) der Box (1) lösbar mit dieser verbindbar ist.

6. Multifunktionsgerät nach Anspruch 5,
**dadurch gekennzeichnet,**
**dass** zur lösbaren Verbindung ein Schlitz (15) an der Oberseite (4) der Box (1) und eine am vorderen Ende (16) der zweiten Arbeitsplatte (3) angeordnete Klemmplatte (14) dienen.

7. Multifunktionsgerät nach Anspruch 1,
**dadurch gekennzeichnet,**
**dass** die beiden Arbeitsplatten (2, 3) in der ausgeklappten Position in einem Winkel von 60° - 90° angeordnet sind.

8. Multifunktionsgerät nach Anspruch 1,
**dadurch gekennzeichnet,**
**dass** mindestens eine der Arbeitsplatten (2, 3) eine Aufnahme (17, 18) für auswechselbar ausgebildete Schneid- und Reibwerkzeuge (19, 20, 21) aufweist.

9. Multifunktionsgerät nach Anspruch 8,
**dadurch gekennzeichnet,**
**dass** die Aufnahme (18) an der Unterseite (5) der Box (1) an ihrem dem Gelenk (13) abgewandten Ende (23) einen Anschlag (25) aufweist.

10. Multifunktionsgerät nach Anspruch 6,
**dadurch gekennzeichnet,**
**dass** die Klemmplatte (14) den formschlüssigen Abschluss der beiden hintereinander angeordneten Arbeitsplatten (2, 3) in der eingeklappten Position gegenüber der Box (1) bildet.

11. Multifunktionsgerät nach Anspruch 1,
**dadurch gekennzeichnet,**
**dass** die Box (1) an ihrer Unterseite (5) mindestens eine Aufnahme (26) für ein Werkzeug (27) aufweist.

12. Multifunktionsgerät nach Anspruch 1,
**dadurch gekennzeichnet,**
**dass** die Box (1) mit einer korrespondierend zu deren Oberseite (4) ausgebildeten Abdeckplatte (28) ausgerüstet ist.
